# EUROPÄISCHE PATENTSCHRIFT

(11) **EP 2 624 969 B1**
(45) Veröffentlichungstag und Bekanntmachung des Hinweises auf die Patenterteilung: **24.06.2015**
(21) Anmeldenummer: 11761571.6
(22) Anmeldetag: 21.09.2011
(51) Int. Cl.: G01N 15/00, G01N 15/06, G01N 35/00, G01N 1/02, B08B 3/02, B08B 3/04, B08B 3/14

(54) **VORRICHTUNG UND VERFAHREN FÜR DAS ERMITTELN EINER VERSCHMUTZUNG VON GEGENSTÄNDEN**
DEVICE AND METHOD FOR DETERMINING SOILING OF OBJECTS
DISPOSITIF ET PROCÉDÉ PERMETTANT DE DÉTERMINER L'ENCRASSEMENT D'OBJETS

(30) Priorität: 04.10.2010 DE 102010041930
(43) Veröffentlichungstag der Anmeldung: 14.08.2013
(73) Patentinhaber: Dürr Ecoclean GmbH, 70794 Filderstadt (DE)
(72) Erfinder: DAVID, Hermann-Josef, 52156 Monschau (DE); KÄSKE, Egon, 52078 Aachen (DE)
(74) Vertreter: Gauss, Nikolai
(86) Internationale Anmeldenummer: PCT/EP2011/066470
(87) Internationale Veröffentlichungsnummer: WO 2012/045582

(56) Entgegenhaltungen:
- WO-A1-2007/093001
- US-A- 5 385 159
- US-A- 6 019 110
- US-A1- 2003 136 424

## Beschreibung

Die Erfindung betrifft eine Vorrichtung für das Ermitteln einer Verschmutzung von Gegenständen, insbesondere von Werkstücken, mit einer Spülzone für das Abspülen von an einem einzelnen Gegenstand angelagerten Schmutzpartikeln mittels eines Fluids, und mit einer Sammeleinrichtung, die wenigstens ein Rückhaltemittel zum Auffangen der von dem einzelnen Gegenstand abgespülten Schmutzpartikeln aufweist.

Schmutzpartikel, insbesondere Spangut, Staub, Gusssand oder auch Flüssigkeitströpfchen können die Funktion von industriell hergestellten Produkten wie z. B. Einspritzdüsen für Brennkraftmaschinen beeinträchtigen. Die Sauberkeit von Werkstücken in industriellen Produktionsprozessen ist deshalb von großer Bedeutung. In industriellen Fertigungsanlagen muss daher die Sauberkeit bzw. Verschmutzung von Werkstücken systematisch überprüft werden. Die Überprüfung der Sauberkeit bzw. Verschmutzung ist insbesondere vor Zwischen- und Endmontagen wichtig.

Um eine gleich bleibende Sauberkeit von Werkstücken zu gewährleisten, ist es bekannt, deren Verschmutzungsgrad in Produktionsprozessen mittels Stichproben zu überprüfen. Für das Bestimmen des Verschmutzungsgrades eines Werkstücks in der industriellen Produktion wird das Werkstück üblicherweise von einem Mitarbeiter mit einer Spritzpistole in einer Analysewanne mit Flüssigkeit abgespült. Die Schmutzpartikel an dem Werkstück werden hierdurch von dem Werkstück entfernt und gelangen in die Spülflüssigkeit. Die Flüssigkeit mit den Schmutzpartikeln wird dann aufgefangen. Sie wird mit einer Filtermembran gefiltert. Schmutzpartikel von dem Werkstück werden dabei in der Filtermembran zurückgehalten. Die Filtermembran wird anschließend gewogen, um aus dem Gewicht der Filtermembran auf den Verschmutzungsgrad des Werkstücks zu schließen. Da eine Überprüfung von allen Werkstücken in einem Produktionsprozess sehr aufwendig ist, werden hier häufig nur Stichproben untersucht.

Dieses manuelle Bestimmen eines Verschmutzungsgrads von Werkstücken ist allerdings nicht nur zeitaufwendig, sondern auch ungenau. Bei dem Abspülen des Werkstücks mit Flüssigkeit besteht die Gefahr, dass das Werkstück verschmutzt. Dokument US 2003/0136424A1 offenbart eine Vorrichtung zum Reinigen eines Werkstück umfassend einer Sensor der den Verschmutzungsgrad des Reinigungsfluid Festlegt.

Aufgabe der Erfindung ist es, das automatisierte, zuverlässig Ermitteln einer Verschmutzung von Werkstücken in einem Produktionsprozess zu ermöglichen.

Diese Aufgabe wird durch eine Vorrichtung der eingangs genannten Art gelöst, die eine Transporteinrichtung für das Bewegen der mit dem wenigstens einen Rückhaltemittel aufgefangenen Schmutzpartikel von dem einzelnen Gegenstand zu einer Messeinrichtung für das Vermessen wenigstens einer physikalischen Größe der von dem einzelnen Gegenstand abgespülten Schmutzpartikel enthält.

Von Vorteil ist es, wenn die Messeinrichtung eine Analyseeinrichtung enthält, in der aus der Messinformation über die von dem einzelnen Gegenstand abgespülten Schmutzpartikel der Verschmutzungsgrad dieses Gegenstands ermittelt wird.

In einer bevorzugten Ausführungsform der Erfindung ist das Rückhaltemittel mit einer Transportvorrichtung verlagerbar, um es aus der Sammeleinrichtung in die Messeinrichtung zu bewegen. Dabei ist das Rückhaltemittel bevorzugt ein Filter. Dieses Filter kann z. B. als Filtermembran ausgebildet sein, die in einem Membranhalter aufgenommen ist. Günstigerweise gibt es in der Vorrichtung für solche Membranhalter mit Filter ein Magazin. Von Vorteil ist es, die Transporteinrichtung als einen automatisch gesteuerten Manipulator, insbesondere als Roboter auszubilden. Mit diesem Manipulator oder Roboter ist es möglich, die Membranhalter automatisiert aus dem Magazin in die Sammeleinrichtung und von der Sammeleinrichtung in die Messeinrichtung zu bewegen.

In einer bevorzugten Ausführungsform der Erfindung ist das Filter ein Abschnitt in einem Filterband. Dieses Filterband kann von einer Abwickelstation zu einer Aufwickelstation als Transporteinrichtung für den Abschnitt in dem Filterband bewegt werden.

Bevorzugt gibt es in der Vorrichtung ein Leitungssystem für das Umwälzen von Fluid für das Abspülen von Schmutzpartikeln in der Spülzone. Von Vorteil ist es, in dem Leitungssystem eine Saugeinrichtung für das Ansaugen von mit Schmutzpartikeln beaufschlagtem Fluid durch das Rückhaltemittel anzuordnen. Günstigerweise ist in der Spülzone für das Abspülen mit Extraktionsfluid eine Leitung mit einer oder mehreren Düsen vorgesehen.

Von Vorteil ist es, die Vorrichtung mit einer Kammer auszubilden, welche die Spülzone umgibt. Damit ein Gegenstand, z. B. ein Werkstück beim Analysieren von dessen Verschmutzung in der Vorrichtung nicht verschmutzen kann und das Ergebnis einer entsprechenden Verschmutzungsanalyse nicht verfälscht wird, enthält die Vorrichtung ein Filter, z. B. ein HEPA-Filter, durch das der Kammer gefiltertes gasförmiges Fluid, etwa Luft, zugeführt wird. In einem HEPA-Filter können Kleinstpartikel mit einer Größe bis in den Bereich von 0,3 µm abgefiltert werden. Ein HEPA-Filter ermöglicht damit insbesondere, Raumluft von Feinstaub, Tabakqualm, Rauch, Hausstaub, Pollen, Blütenstaub, Poren und Gerüchen zu befreien. Mit einem HEPA-Filter lassen sich Gesamtabscheidergrade von 99,9% für Feinstaub und Schwebstoffe erreichen, d.h. von 10 000 Staubpartikeln werden in einem entsprechenden HEPA-Filter lediglich 3 nicht abgesondert. Ein HEPA-Filter kann mit einem engmaschigen Gewebe aus Zellulose, synthetischen Fasern oder Glasfasern aufgebaut werden. Dieses Gewebe wird in dem Filter mit bis zu 1000 Schichten übereinander gelegt. Hierdurch wird eine sehr große Filterfläche bereitgestellt. Eine besonders gute Filterwirkung lässt sich erzielen, indem das HEPA-Filter mit einem Aktivkohlefilter kombiniert ist. Dieses Aktivkohlefilter ist dem HEPA-Filter günstigerweise vorgeschaltet. Durch die Zufuhr von gefiltertem, gasförmigem Fluid entsteht in der Kammer und in der Spülzone ein Überdruck. Dies hat zur Folge, dass in die Kammer aus der Umgebung von außen keine Staubteilchen, Schmutzpartikel und Flüssigkeitströpfchen eindringen können. Für das Einstellen des Überdrucks eignet sich insbesondere ein Ventilator, der die Kammer durch das Filter mit gefilterter Luft beaufschlagt. Für das Reinigen von Kammer und Spülzone ist es günstig, die Vorrichtung mit einer Einrichtung für das Spülen von Wänden der Kammer mit Fluid auszurüsten.

Indem die Spülzone mit der Sammeleinrichtung und der Messeinrichtung in einem containerartigen Transportschrank integriert werden, ist es möglich, die Vorrichtung flexibel und einfach verlagerbar an unterschiedlichen Stellen in einer industriellen Fertigungsanlage einzusetzen.

Es ist von Vorteil in der Vorrichtung insbesondere ein Mikroskop mit einer digitalen Kamera und mit einem Auswerterechner als Messeinrichtung einzusetzen. Dies ermöglicht es, den Verschmutzungsgrad und auch die Art der Verschmutzung von Gegenständen bzw. Werkstücken mit den Methoden der digitalen Bildverarbeitung zu analysieren.

Um mittels der erfindungsgemäßen Vorrichtung die Verschmutzung von Gegenständen, insbesondere von Werkstücken zu bestimmen, ist es von Vorteil, die Kammer in der Vorrichtung in Reinraumatmosphäre zunächst mit Extraktionsfluid zu spülen. Die abgespülten Schmutzpartikel werden dann gesammelt. In einem bevorzugten Verfahren zum Analysieren der Verschmutzung wird die räumliche Ausdehnung der gesammelten Schmutzpartikel dann mit einem Referenzwert verglichen.

Im Folgenden wird die Erfindung anhand der in der Zeichnung in schematischer Weise dargestellten Ausführungsbeispiele näher erläutert.

Es zeigen:
- Fig. 1: eine erste Vorrichtung für das Ermitteln der Verschmutzung von Werkstücken;
- Fig. 2: eine Schnittansicht der ersten Vorrichtung mit Sammeleinrichtung für Schmutzpartikel und einer Messeinrichtung;
- Fig. 3: eine Schnittansicht der ersten Vorrichtung mit einem Handhabungsroboter;
- Fig. 4: eine zweite Vorrichtung für das Ermitteln der Verschmutzung von Werkstücken mit einer Sammeleinrichtung für Schmutzpartikel und einer Messeinrichtung; und
- Fig. 5: sowie Fig. 6 die Sammelreinrichtung der zweiten Vorrichtung in unterschiedlichen Betriebspositionen.

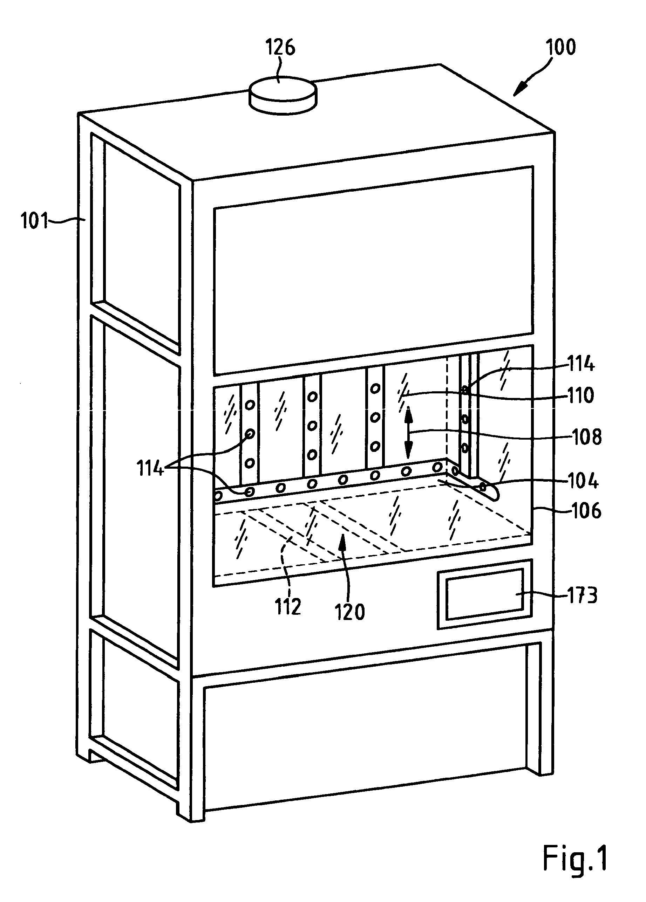

Die Fig. 1 zeigt eine Vorrichtung 100 für das Ermitteln und Analysieren der Verschmutzung von Werkstücken 102. Die Vorrichtung 100 umfasst einen Container 101 in Form eines Transportschranks. Der Container 101 hat eine Kammer 104. Für die Kammer 104 hat der Container 101 eine Zugangsöffnung 106. Die Kammer 104 kann mittels einer entsprechend dem Doppelpfeil 108 bewegbaren Glasscheibe 110 geöffnet und geschlossen werden. In der Kammer 104 gibt es eine Halteeinrichtung 112 für ein Werkstück, dessen Verschmutzung analysiert werden soll. In der Kammer 104 sind Sprühdüsen 114 angeordnet. Die Sprühdüsen 114 sind an ein Leitungssystem für Spülflüssigkeit als Fluid für das Abspülen eines Werkstücks angeschlossen. Die Sprühdüsen 114 ermöglichen in der Kammer 104 das Abspülen eines Werkstücks in der Spülzone 120.

Als Spülflüssigkeit für das Abspülen von Werkstücken eignet sich insbesondere Reinigungsflüssigkeit in Form von wässrigen Neutralreinigern oder von Kaltreinigern. Mit diesen Reinigungsflüssigkeiten lassen sich Werkstücke mit hoher Effizienz von Schmutzpartikeln und Verunreinigungen befreien, wenn der Druck in dem Leitungssystem für Spülflüssigkeit im Bereich der Sprühdüsen 114 zwischen 1 bar und 6 bar liegt. Die Sprühdüsen 114 können insbesondere als Vollstrahldüsen und/oder als Flachstrahldüsen ausgebildet sein. Es hat sich gezeigt, dass mit solchen Düsen eine gute Reinigungswirkung erzielbar ist, wenn sie mit einem Fluiddruck von etwa 3 bar betrieben werden. In der Kammer 104 können aber auch Düsenlanzen eingesetzt werden, die mehrere Düsen haben, die von Bohrungen an dem Außenumfang einer Lanze gebildet sind.

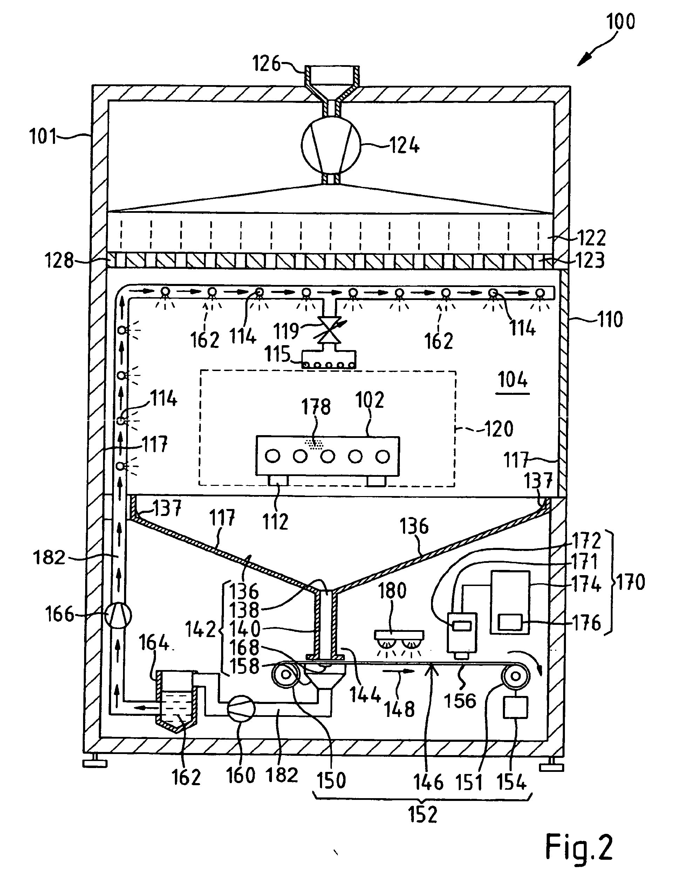

Die Fig. 2 ist eine schematische Schnittansicht der Vorrichtung 100. Die Vorrichtung 100 enthält ein Luftfilter 122. Das Luftfilter 122 ist bevorzugt als ein sogenanntes "HEPA-Feinfilter" mit den nachfolgend genannten, besonderen Merkmalen gestaltet. Das Luftfilter 122 wirkt als Schwebstofffilter. Es hat bevorzugt eine Filterfeinheit von ungefähr 10 µm oder weniger. Die Filterfeinheit gibt die Partikelgröße an, ab welcher Partikel von dem Filter zurückgehalten werden.

Für das Filtern von Luft enthält das Luftfilter 122 insbesondere Glasfasermatten mit Glasfasern, deren Faserdurchmesser vorzugsweise in dem Bereich zwischen 1 µm und 10 µm liegt. Solche Glasfasermatten sind in einem Trägerrahmen festgelegt und bilden dort eine wellen- bzw. zackenförmige Filterstruktur. Mittels der Glasfasermatten wird die durch das Luftfilter 122 strömende Luft zum einen mit Siebwirkung gereinigt. Das heißt, Schmutzpartikel in der durch das Luftfilter 122 strömenden Luft bleiben aufgrund ihrer Größe zwischen den Fasern der Glasfasermatten hängen. Darüber hinaus wird die Luft in dem Luftfilter 122 auch durch Trägheitseffekte gereinigt. Die Schmutzpartikel in der Luft, die das Luftfilter 122 durchsetzt, folgen nämlich nicht ohne weiteres einem Luftstrom um die einzelnen Glasfasern in den Glasfasermatten. Aufgrund von Trägheit prallen auch manche Schmutzpartikel gegen entsprechende Glasfasern in den Glasfasermatten. Solche Schmutzpartikel bleiben dann an den Glasfasern fest haften. Die durch das Luftfilter 122 strömende Luft wird darüber hinaus auch mit dem sogenannten Sperreffekt gereinigt. Der Sperreffekt beruht darauf, dass sehr kleine Schmutzpartikel von Glasfasern angezogen werden, wenn sie Glasfasern in dem Luftfilter sehr nahe kommen. Außerdem wird die Luft in dem Luftfilter 122 mit Diffusionseffekten gereinigt. Sehr kleine Schmutzpartikel bewegen sich in dem Luftfilter 122 nämlich nicht mit der Strömung eines Luftstroms, sondern haben eine der Brownschen Molekularbewegung entsprechende Flugbahn. Wenn diese Brownsche Bewegung der Schmutzpartikel zu Zusammenstößen mit Glasfasern führt, bleiben diese Schmutzpartikel ebenfalls an den entsprechenden Fasern haften.

Das Luftfilter 122 entspricht der Filterklasse H 10 gemäß der europäischen Norm EN 1822-1:1998. Für ein besonders genaues Analysieren der Verschmutzung von Werkstücken ist es günstig, als Luftfilter ein HEPA-Filter einzusetzen, dessen Filterfeinheit ungefähr 5 µm oder weniger beträgt. Die Spülflüssigkeit 162 wirkt dabei als Extraktionsflüssigkeit für die Schmutzpartikel 178.

Die Vorrichtung 100 enthält einen Ventilator 124, mittels dem Luft durch eine Ansaugvorrichtung 126 über das Feinfilter 122 durch Kanäle 123 in einer Decke 128 in der Kammer 104 geführt werden. Der Ventilator 124 ermöglicht, in der Kammer 104 eine Überdruckatmosphäre aus gefilterter Luft einzustellen. Diese Maßnahme gewährleistet, dass in der Kammer 104 eine Reinraumatmosphäre entsprechend der Reinraumklasse 3 nach ISO 14644 oder der Luftreinheitsklasse 100 nach US-Federal-Standard 2009 eingestellt werden kann. Sie gewährleistet insbesondere, dass aus der Umgebungsluft keine Schmutzpartikel und Flüssigkeitströpfchen in die Kammer 104 eindringen können.

Mittels der Sprühdüsen 114 können Schmutzpartikel 178 an einem in der Kammer 104 angeordneten Werkstück 102 mit Spülflüssigkeit 162 abgespült werden. Die Spülflüssigkeit 162 wirkt so als Extraktionsflüssigkeit für die Schmutzpartikel 178 an einem Werkstück 102. Die Kammer 104 hat Wände 117 und einen trichterförmigen Boden 136 mit abgerundeten Ecken 137. Die Wände 117 sind Spritzschutzwände. Die abgerundeten Ecken 137 bewirken, dass in der Kammer 104 keine Schmutznester entstehen können. In dem Boden 136 gibt es eine Ablauföffnung 138. Die Ablauföffnung 138 mündet in eine Rohrleitung 140.

Um die Wände 117 der Kammer 104 zu reinigen, enthält die Vorrichtung 100 eine Wandspüleinrichtung 115. Die Wandspüleinrichtung 115 ist über ein Steuerventil 119 mit der Rohrleitung 136 verbunden.

In der Vorrichtung 100 gibt es ein bewegbares Filterband 146. Das Filterband 146 besteht aus Filtervlies. Es wird in der Vorrichtung 100 in der Richtung des Pfeils 148 von einer Abwickelrolle 150 zu einer Aufwickelrolle 151 getaktet bewegt. Die Abwickelrolle 150 ist eine Abwickelstation, die Aufwickelrolle 151 ist eine Aufwickelstation. Für das Bewegen des Filterbands 146 ist die Aufwickelrolle 151 einem Elektromotor 154 zugeordnet. Das Filterband 146 ist an dem stirnseitigen Flansch 144 der Rohrleitung 140 geführt.

Auf der dem stirnseitigen Flansch 144 abgewandten Seite 156 des Filterbands 146 ist ein Trichterelement 158 angeordnet. Das Trichterelement 158 ist an das Leitungssystem 182 für Spülflüssigkeit angeschlossen. Der Abschnitt 168 des Filterbands 146 bei dem Trichterelement 158 wirkt als Rückhaltemittel in Form eines Filters für Schmutzpartikel 178 von dem Werkstück 102. Der trichterförmige Boden 136 der Kammer 104, die Ablauföffnung 138, die Rohrleitung 140, der Abschnitt 168 und das Trichterelement 158 bilden eine Sammeleinrichtung 142, in welcher der Abschnitt 168 ein Rückhaltemittel für abgespülte Schmutzpartikel 178 ist.

Mittels des Elektromotors 154 kann der Abschnitt 168 unter Aufrollen Filterbands 146 auf einer Aufwickelrolle 152 zu einer Heizeinrichtung 180 und weiter zu einer Messeinrichtung 170 mit einem Mikroskop 171 bewegt werden. Die Heizeinrichtung 180 dient zum Trocknen eines Abschnitts 168 des Filterbands 146, bevor dieser zu dem Mikroskop 171 geführt wird. Dies ermöglicht das Visualisieren der von einem Werkstück 102 abgespülten Schmutzpartikel 178 mittels des Mikroskops 171 ohne störende Flüssigkeitströpfchen. Das Filterband 146 mit der Abwickelrolle 150 und der Aufwickelrolle 151 wirkt als Transporteinrichtung 152 für den Abschnitt 168.

In dem Leitungssystem 182 für Spülflüssigkeit ist eine Saugpumpe 160 angeordnet. Mittels der Saugpumpe 160 kann Spülflüssigkeit 162 durch den Abschnitt 168 des Filterbands 146 im Bereich des Trichterelements 158 angesaugt und zu einem Vorratsbehälter 164 für Spülflüssigkeit gefördert werden. Das Leitungssystem für Spülflüssigkeit 182 enthält eine Förderpumpe 166. Mittels der Förderpumpe 166 kann die Spülflüssigkeit aus dem Vorratsbehälter 164 zu den Düsen 114 gepumpt werden, um ein in der Spülzone 120 angeordnetes Werkstück mit der Spülflüssigkeit 162 abzuspülen.

Das Mikroskop 171 in der Messeinrichtung 170 enthält einen digitalen Bildsensor 172. Der digitale Bildsensor 172 ist mit einer Rechnereinheit 174 verbunden. Die Rechnereinheit 174 ist eine Analyseeinrichtung. Sie hat einen Programmspeicher 176, in dem ein Bildverarbeitungsprogramm geladen ist. Mittels des Bildverarbeitungsprogramms kann die Anzahl der in dem Abschnitt 168 des Filterbands 146 aufgefangenen Schmutzpartikel 178 und deren charakteristische Größe, z.B. deren Länge bestimmt und dokumentiert werden. Die Anzahl von Schmutzpartikeln oder auch deren charakteristische Größe ist ein Maß für die Verschmutzung eines Werkstücks. Mit der Rechnereinheit 174 kann somit durch Vergleich mit einem Referenzwert der Verschmutzungsgrad eines einzelnen Werkstücks ermittelt werden.

Für das Anzeigen des mittels der Messeinrichtung 170 ermittelten Verschmutzungsgrades eines Werkstücks 102 hat die Vorrichtung eine Anzeigeeinheit 173, die in der Fig. 1 gezeigt ist.

Die anhand von Fig. 1 und 2 beschriebene Vorrichtung zum Analysieren der Verschmutzung von Werkstücken wird wie folgt betrieben:
Zunächst wird die Kammer 104 selbst mit Reinigungs- bzw. Extraktionsflüssigkeit 162 mit der Wandspüleinrichtung 115 gespült, um an den Wandungen 117 der Kammer 104 abgelagerte Schmutzpartikel aus der Anordnung zu entfernen. Die Spülflüssigkeit 162 wird mittels der Saugpumpe 160 angesaugt. Schmutzpartikel 178 aus der Kammer 104 werden dabei in dem Abschnitt 168 des Filterbands 146 zurückgehalten.

Mittels des Elektromotors 154 wird dieser Abschnitt 168 dann an der Heizeinrichtung 180 vorbei zu dem Mikroskop 170 bewegt. Mit dem Mikroskop 170 und der dem Mikroskop 170 zugeordneten Rechnereinheit 174 wird dann der Verschmutzungsgrad der Kammer 104 bestimmt. Wenn die Kammer 104 einem vorher festgelegten und in der Rechnereinheit 174 abgespeicherten Reinheitskriterium genügt, wird z. B. darauf ein Werkstück 102, dessen Verschmutzungsgrad bestimmt werden soll, von einer Bedienperson in der Kammer 104 angeordnet.

Bei geschlossener Scheibe 110 wird dann das Werkstück 102 mit Spülflüssigkeit abgespült. Wenn in dem Abschnitt 168 zu viele Schmutzpartikel erfasst werden, wird die Prozedur des Spülens der Kammer 104 gegebenenfalls wiederholt. Die Spülflüssigkeit wird durch die Absaugöffnung 138 mittels der Saugpumpe 160 durch das Filterband 146 bewegt. Nach dem Abspülen des Werkstücks wird das Filterband 146 zunächst zu der Heizeinrichtung 180 und dann zu der Messeinrichtung 170 bewegt, um mittels des Mikroskops 171 die in dem Abschnitt 168 des Filterbands 146 zurückgehaltenen Schmutzpartikel 178 von dem Werkstück 102 zu analysieren. Wenn dabei die mit der Messeinrichtung 170 erfasste Verschmutzung einen Schwellwert überschreitet, wird an der Anzeigeeinheit 173 der Vorrichtung 100 eine Warnmeldung abgegeben.

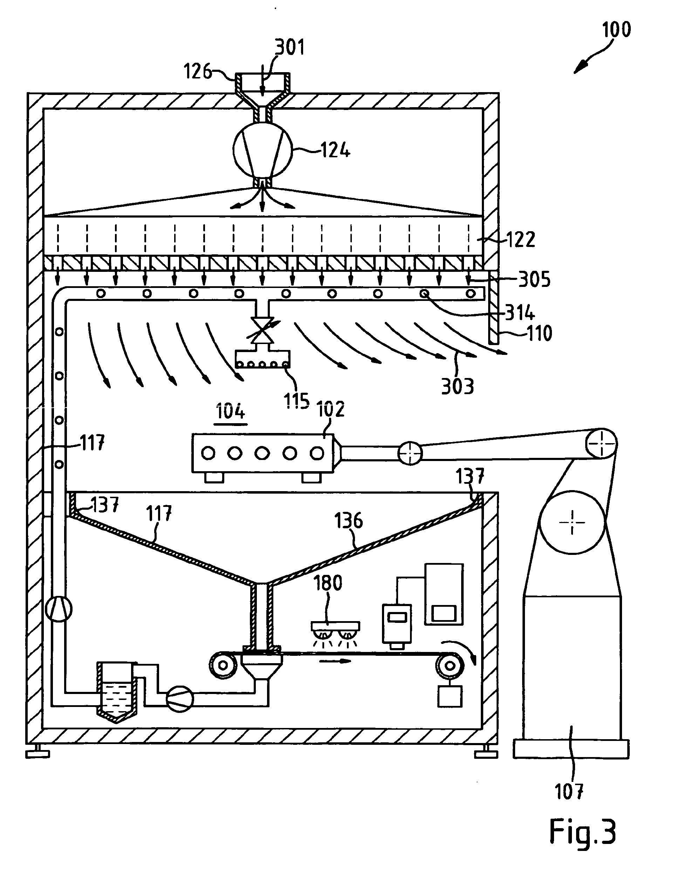

Die Fig. 3 zeigt die Vorrichtung 100 für das Analysieren der Verschmutzung von Werkstücken mit einer als Roboter ausgebildeten Handhabungsvorrichtung 107. Für das Be- und Entladen der Kammer 104 mit einem Werkstück 102 ist dann keine Bedienperson erforderlich. Damit in die geöffnete Kammer 104 keine Schmutzpartikel aus der Umgebungsluft eindringen können, wird dabei mittels des Ventilators 124 ein Luftstrom 301 angesaugt und ein durch das Luftfilter 122 und die Kanäle 123 strömender Luftstrom 303 aus der Kammer 104 nach außen eingestellt.

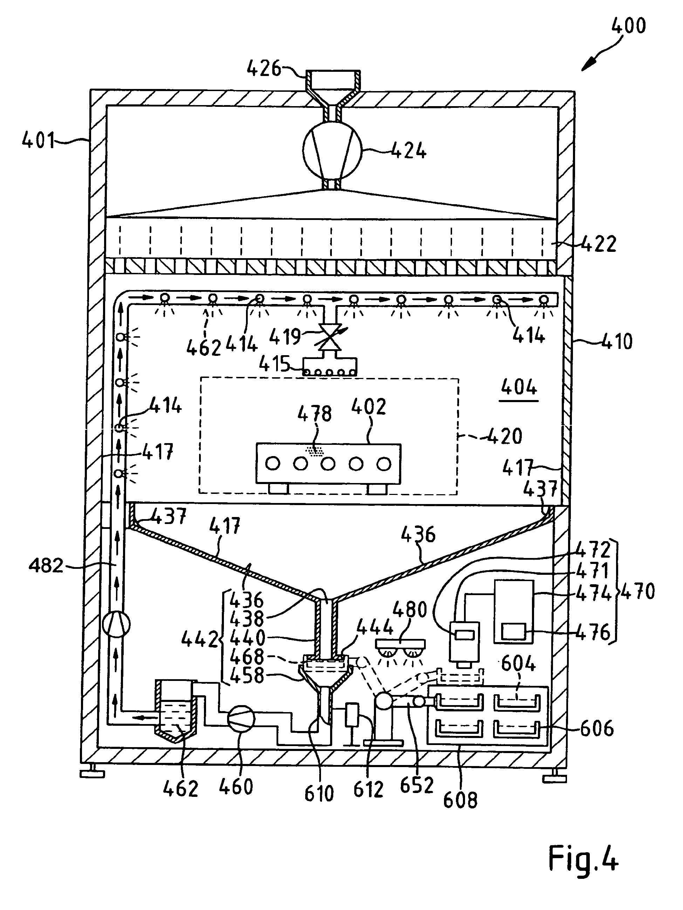

Aufgrund der Warnmeldung kann dann z.B. die Messung der Verschmutzung des Werkstücks 102 wiederholt werden. Bei einer Messung der Verschmutzung in der Vorrichtung 100 wird das Werkstück nämlich auch gereinigt. Aufgrund der Warnmeldung kann aber z.B. auch die Unterbrechung der Produktion in einer industriellen Fertigungseinrichtung veranlasst werden. Die Fig. 4 zeigt eine weitere Vorrichtung 400 zum Ermitteln und Analysieren der Verschmutzung von Werkstücken. Soweit er Aufbau der Vorrichtung 400 dem Aufbau der Vorrichtung 100 aus Fig. 1 und 2 entspricht, sind Baugruppen in der Fig. 4 im Vergleich zu Fig. 1 und 2 mit um die Zahl 300 erhöhten Bezugszeichen kenntlich gemacht.

Die Vorrichtung 400 hat einen Manipulator 652. Der Manipulator 652 ist ein Handhabungsroboter. Er dient dazu, ein Filterelement 604 in Form einer Filtermembran, die in einen Filterhalter 606 angeordnet ist, aus einem Magazin 608 aufzunehmen, um es an dem stirnseitigen Flansch 444 der Rohrleitung 440 zu positionieren.

Das Filterelement 604 befindet sich in dem Filterhalter 606 in einem Klemmring (nicht gezeigt). Der Klemmring gewährleistet, dass sich in dem Filterhalter 606 mit Schmutzpartikeln versetztes Fluid an dem Filterelement 604 nicht vorbeibewegen kann.

In der Vorrichtung 400 ist das Trichterelement 458 an einem Teleskoprohr 610 angeordnet. Das Trichterelement 458 kann in diesem Teleskoprohr 610 mittels eines Antriebszylinders 612 zwischen einer Filterposition und einer Freigabeposition bewegt werden. Hier wirkt der trichterförmige Boden 436 der Kammer 404, die Ablauföffnung 438, die Rohrleitung 440, der Filterhalter 606 mit der Filtermembran 604 sowie dem Trichterelement 458 als eine Sammeleinrichtung 442, in welcher die Filtermembran 604 ein Rückhaltemittel für Schmutzpartikel 478 ist. Der Manipulator 652 ist eine Transporteinrichtung für dieses Rückhaltemittel.

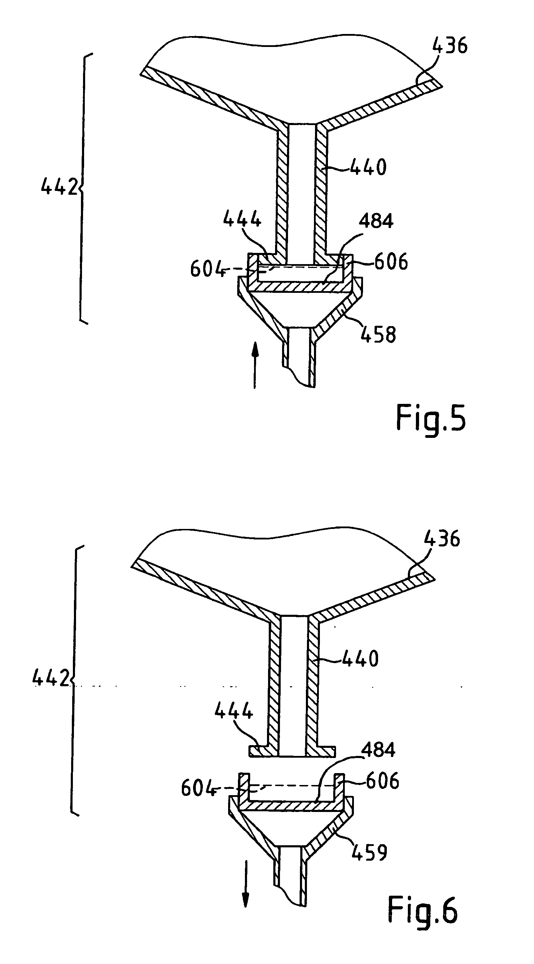

Die Fig. 5 zeigt die Rohrleitung 440 und das Trichterelement 458 in der Filterposition. In dieser Position kann mittels der Saugpumpe 460 in dem Leitungssystem 182 durch das Filterelement 604 in dem Filterhalter 606 Spülflüssigkeit 462 aus der Kammer 404 angesaugt werden.

Die Fig. 6 zeigt die Rohrleitung 440 und das Filterelement 604 in der Freigabeposition. Aus der Freigabeposition kann der Filterhalter 606 mit dem Filterelement 604 mittels des Manipulators 652 zu der Heizeinrichtung 480 und von der Heizeinrichtung 480 unter das Mikroskop 471 der Messeinrichtung 470 bewegt werden.

In der Messvorrichtung 470 werden die in einem Filterelement 604 angesammelten Schmutzpartikel 478 vermessen. Das Ergebnis der Messung wird dann an einer Anzeigeeinheit der Vorrichtung zur Anzeige gebracht. Alternativ oder zusätzlich kann das Ergebnis der Messung auch an die Leitstelle einer industriellen Produktionsanlage übermittelt werden.

Nach der Messung wird der Filterhalter 606 mit dem Filterelement 604 in das Magazin 608 zurückbewegt. Für eine neue Messung entnimmt dann der Manipulator 652 dem Magazin 608 einen neuen Filterhalter 606 mit einem unverbrauchten Filterelement 604 und bewegt dieses an den stirnseitigen Flansch 444 der Rohrleitung 440.

Es ist möglich, die Wandungen 417 der Kammer 404 in der Vorrichtung 400 mit Fluid aus der Wandspüleinrichtung 415 zu spülen, auch ohne dass ein Filterelement 604 an dem stirnseitigen Flansch der Rohrleitung 440 angeordnet ist. Wenn die Kammer 404 ohne ein Werkstück, aber mit einem bei der Rohrleitung 440 angeordneten Filterelement 604 gespült wird, ist es möglich, einen Blindwert für Schmutzpartikel in der Vorrichtung 400 zu bestimmen.

Die vorstehend beschriebenen automatisierten Vorrichtungen für das Analysieren der Verschmutzung von Werkstücken eignen sich insbesondere zur Integration in eine Fertigungs- oder Montagelinie, um dort eine automatische Sauberkeitsanalyse zu realisieren. Die Sauberkeitsanalyse ist in einer Fertigungs- oder Montagelinie insbesondere dort sinnvoll, wo eine Vor- oder Endmontage von Werkstücken erfolgt. Hier können z.B. in einem Fertigungsprozess in regelmäßigen Abständen stichprobenartig Werkstücke überprüft werden. Dies ermöglicht z.B., einem Leitrechner in einer Fertigungsanlage ein automatisches Chargenprotokoll zu übermitteln. Die Sauberkeitsanalyse vor der Vor- und Endmontage von Werkstücken gewährleistet, dass keine Montage von verschmutzten Werkstücken erfolgt. Somit bezieht sich die Erfindung auch auf eine Montagelinie zur Vor- oder Endmontage von_komplexen Systemen aus mehreren Bauteilen, wobei eine oben beschriebene Analysevorrichtung zum Einsatz kommt.

Zusammenfassend sind insbesondere folgende bevorzugte Merkmale der Erfindung festgehalten: Die Erfindung betrifft eine Vorrichtung 100, 400 für das Ermitteln einer Verschmutzung von Gegenständen, insbesondere von Werkstücken. Die Vorrichtung 100, 400 hat eine Spülzone 120, 420 für das Abspülen von an einem einzelnen Gegenstand 102, 402 angelagerten Schmutzpartikel 178, 478 mittels eines Fluids. In der Vorrichtung 100, 400 gibt es eine Sammeleinrichtung 142, 442, die wenigstens ein Rückhaltemittel 168, 604 zum Auffangen der von dem einzelnen Gegenstand 102, 402 abgespülten Schmutzpartikeln 178, 478 aufweist. Die Vorrichtung 100, 400 enthält eine Transporteinrichtung 152, 652 für das Bewegen der mit dem wenigstens einen Rückhaltemittel 168, 604 aufgefangenen Schmutzpartikel 178, 478 von dem einzelnen Gegenstand 102, 402 zu einer Messeinrichtung 170, 470. Die Messeinrichtung 170, 470 dient für das Vermessen wenigstens einer physikalischen Größe der von dem einzelnen Gegenstand 102, 402 abgespülten Schmutzpartikel 178, 478.

## Patentansprüche

1. Vorrichtung (100, 400) für das Ermitteln einer Verschmutzung von Gegenständen, insbesondere von Werkstücken,
mit einer Spülzone (120, 420) für das Abspülen von an einem einzelnen Gegenstand (102, 402) angelagerten Schmutzpartikel (178, 478) mittels eines Fluids, und
mit einer Sammeleinrichtung (142, 442), die wenigstens ein Rückhaltemittel (168, 604) zum Auffangen der von dem einzelnen Gegenstand (102, 402) abgespülten Schmutzpartikel (178, 478) aufweist,
**gekennzeichnet durch**
eine Transporteinrichtung (152, 652) für das Bewegen der mit dem wenigstens einen Rückhaltemittel (168, 604) aufgefangenen Schmutzpartikel (178, 478) von dem einzelnen Gegenstand (102, 402) zu einer Messeinrichtung (170, 470) für das Vermessen wenigstens einer physikalischen Größe der von dem einzelnen Gegenstand (102, 402) abgespülten Schmutzpartikel (178, 478).

2. Vorrichtung nach Anspruch 1, **dadurch gekennzeichnet, dass** die Messeinrichtung eine Analyseeinrichtung (174, 474) enthält, in der aus der Messinformation über die von dem einzelnen Gegenstand (102, 402) abgespülten Schmutzpartikel (178, 478) der Verschmutzungsgrad dieses Gegenstands (102, 402) ermittelt wird.

3. Vorrichtung nach Anspruch 1 oder 2, **dadurch gekennzeichnet, dass** die Transporteinrichtung (152, 652) das wenigstens eine Rückhaltemittel (168, 604) aus der Sammeleinrichtung (142, 442) zu der Messeinrichtung (170, 470) bewegt.

4. Vorrichtung nach einem der Ansprüche 1 bis 3, **dadurch gekennzeichnet, dass** das wenigstens eine Rückhaltemittel eine in einem Membranhalter (606) aufgenommene Filtermembran (604) umfasst.

5. Vorrichtung nach Anspruch 4, **dadurch gekennzeichnet, dass** die Transporteinrichtung ein automatisch gesteuerter Manipulator, insbesondere ein Roboter (652) ist, der dazu dient, den Membranhalter (606) aus einem Magazin (608) in die Sammeleinrichtung (442) und/oder aus der Sammeleinrichtung (442) in die Messeinrichtung (470) zu bewegen.

6. Vorrichtung nach einem der Ansprüche 1 bis 3, **dadurch gekennzeichnet, dass** das wenigstens eine Rückhaltemittel einen Abschnitt (168) eines Filterbands (146) umfasst.

7. Vorrichtung nach Anspruch 6, **dadurch gekennzeichnet, dass** das Filterband (146) aus einer Abwickelstation (150) zu einer Aufwickelstation (151) bewegt werden kann und als Transporteinrichtung (152) für den Abschnitt (168) in dem Filterband (146) dient.

8. Vorrichtung nach einem der Ansprüche 1 bis 7, **dadurch gekennzeichnet, dass** ein Leitungssystem (136, 436) für das Umwälzen von Fluid (162, 462) zum Abspülen von Schmutzpartikeln (178, 478) in der Spülzone (120, 420) vorgesehen ist, wobei für das Abspülen mit Fluid (162, 462) in der Spülzone (120, 420) wenigstens eine Düse (114, 414) angeordnet ist.

9. Vorrichtung nach Anspruch 8, **dadurch gekennzeichnet, dass** in dem Leitungssystem (136, 436) eine Saugeinrichtung (160, 460) für das Ansaugen von mit Schmutzpartikeln beaufschlagtem Fluid (162, 462) durch das wenigstens eine Rückhaltemittel (168, 604) angeordnet ist.

10. Vorrichtung nach einem der Ansprüche 1 bis 9, **gekennzeichnet durch** eine die Spülzone (120, 420) umgebende Kammer (104, 404) und eine Einrichtung für das Einstellen eines Überdrucks in der Spülzone (120, 420) und/oder für das Spülen der Spülzone (120, 420) **durch** Zuführen von gasförmigem Fluid (101, 301) in die Kammer (104, 404), das von Schmutzpartikeln (178, 478) befreit ist.

11. Vorrichtung nach Anspruch 9, **dadurch gekennzeichnet, dass** das in die Kammer (104, 404) zuführbare gasförmige Fluid durch ein Filter (122, 422) geführt ist, um es von Schmutzpartikeln zu befreien.

12. Vorrichtung nach Anspruch 11, **dadurch gekennzeichnet, dass** das Filter (122, 422) wellen- oder zackenförmig verlegten Glasfasermatten enthält.

13. Vorrichtung nach einem der Ansprüche 1 bis 12, **dadurch gekennzeichnet, dass** in der Kammer (104, 404) eine Einrichtung (115, 415) für das Spülen einer Wandung (117, 417) der Kammer (104, 404) mit Fluid (162, 462) angeordnet ist.

14. Vorrichtung nach einem der Ansprüche 1 bis 13, **dadurch gekennzeichnet, dass** die Messeinrichtung (170) ein Mikroskop (171, 471) mit einer digitalen Kamera (172) und einen Auswerterechner (174) aufweist.

15. Vorrichtung nach einem der Ansprüche 1 bis 14, **dadurch gekennzeichnet, dass** die Spülzone (120, 420) mit der Sammeleinrichtung (142, 442) und der Messeinrichtung (170, 470) in einem Transportschrank (101, 401) aufgenommen sind.

16. Verfahren für das Ermitteln eines Verschmutzungsgrades von Gegenständen, insbesondere von Werkstücken, mit einer Vorrichtung nach einem der Ansprüche 1 bis 15,
bei dem Schmutzpartikel (178, 478) von einem Gegenstand (102, 402), in einer Reinraumatmosphäre, mittels Fluid (162, 462) abgespült werden,
bei dem die von einem Gegenstand (102, 402) abgespülten Schmutzpartikel (178, 478) gesammelt werden,
bei dem eine räumliche Ausdehnung und/oder eine Anzahl der von dem Gegenstand (102, 402) gesammelten Schmutzpartikel (178, 478) mit einem Referenzwert verglichen wird, und
bei dem aus der Abweichung der räumlichen Ausdehnung und/oder der Anzahl der von dem Gegenstand (102, 402) gesammelten Schmutzpartikel (178, 478) auf den Verschmutzungsgrad des Gegenstands (102, 402) geschlossen wird.

## Claims

1. An apparatus (100, 400) for determining soiling of objects, in particular workpieces,
having a rinsing zone (120, 420) for rinsing off dirt particles (178, 478) built up on an individual object (102, 402) by means of a fluid, and
having a collecting device (142, 442), which has at least one retaining means (168, 604) for capturing the dirt particles (178, 478) rinsed off from the individual object (102, 402),
**characterized by**
a transporting device (152, 652) for moving the dirt particles (178, 478) from the individual object (102, 402) that are captured by the at least one retaining means (168, 604) to a measuring device (170, 470) for measuring at least one physical parameter of the dirt particles (178, 478) rinsed off from the individual object (102, 402).

2. The apparatus as claimed in claim 1, **characterized in that** the measuring device comprises an analyzing device (174, 474), in which the measuring information concerning the dirt particles (178, 478) rinsed off from the individual object (102, 402) is used to determine the degree of soiling of this object (102, 402).

3. The apparatus as claimed in claim 1 or 2, **characterized in that** the transporting device (152, 652) moves the at least one retaining means (168, 604) from the collecting device (142, 442) to the measuring device (170, 470).

4. The apparatus as claimed in one of claims 1 to 3, **characterized in that** the at least one retaining means comprises a filter membrane (604) held in a membrane holder (606).

5. The apparatus as claimed in claim 4, **characterized in that** the transporting device is an automatically controlled 'manipulator, in particular a robot (652), which serves the purpose of moving the membrane holder (606) from a magazine (608) into the collecting device (442) and/or from the collecting device (442) into the measuring device (470).

6. The apparatus as claimed in one of claims 1 to 3, **characterized in that** the at least one retaining means comprises a portion (168) of a filter belt (146).

7. The apparatus as claimed in claim 6, **characterized in that** the filter belt (146) can be moved from an unwinding station (150) to a winding-up station (151) and serves as a transporting device (152) for the portion (168) in the filter belt (146).

8. The apparatus as claimed in one of claims 1 to 7, **characterized in that** a system of lines (136, 436) for circulating fluid (162, 462) for the rinsing off of dirt particles (178, 478) is provided in the rinsing zone (120, 420), at least one nozzle (114, 414) being arranged in the rinsing zone (120, 420) for the rinsing off with fluid (162, 462).

9. The apparatus as claimed in claim 8, **characterized in that** a suction device (160, 460) for sucking in fluid (162, 462) exposed to dirt particles through the at least one retaining means (168, 604) is arranged in the system of lines (136, 436).

10. The apparatus as claimed in one of claims 1 to 9, **characterized by** a chamber (104, 404) surrounding the rinsing zone (120, 420) and a device for setting a positive pressure in the rinsing zone (120, 420) and/or for rinsing the rinsing zone (120, 420) by supplying gaseous fluid (101, 301), which has been freed of dirt particles (178, 478), into the chamber (104, 404).

11. The apparatus as claimed in claim 9, **characterized in that** the gaseous fluid that can be supplied into the chamber (104, 404) has been passed through a filter (122, 422) in order to free it of dirt particles.

12. The apparatus as claimed in claim 11, **characterized in that** the filter (122, 422) comprises glass fiber mats lying in a corrugated or serrated manner.

13. The apparatus as claimed in one of claims 1 to 12, **characterized in that** a device (115, 415) for rinsing a wall (117, 417) of the chamber (104, 404) with fluid (162, 462) is arranged in the chamber (104, 404).

14. The apparatus as claimed in one of claims 1 to 13, **characterized in that** the measuring device (170) has a microscope (171, 471) with a digital camera (172) and an evaluation computer (174).

15. The apparatus as claimed in one of claims 1 to 14, **characterized in that** the rinsing zone (120, 420) with the collecting device (142, 442) and the measuring device (170, 470) are accommodated in a transporting cabinet (101, 401).

16. A method for determining a degree of soiling of objects, in particular of workpieces, by an apparatus as claimed in one of claims 1 to 15,
in which dirt particles (178, 478) are rinsed off from an object (102, 402), in a clean-room atmosphere, by means of fluid (162, 462),
in which the dirt particles (178, 478) rinsed off from an object (102, 402) are collected,
in which a spatial extent and/or a number of the dirt particles (178, 478) collected from the object (102, 402) is compared with a reference value, and in which the deviation of the spatial extent and/or the number of dirt particles (178, 478) collected from the object (102, 402) is used to deduce the degree of soiling of the object (102, 402).

## Revendications

1. Appareil (100, 400) conçu pour déterminer un encrassement d'objets, notamment de pièces usinées, comprenant
une zone de rinçage (120, 420) dévolue à l'élimination par rinçage, au moyen d'un fluide, de particules de crasse (178, 478) déposées sur un objet individuel (102, 402), et
un dispositif collecteur (142, 442) muni d'au moins un moyen de retenue (168, 604), en vue de recueillir lesdites particules de crasse (178, 478) éliminées dudit objet individuel (102, 402) par rinçage,
**caractérisé par**
un dispositif de transport (152, 652) affecté à la mise en mouvement des particules de crasse (178, 478), recueillies par le moyen de retenue (168, 604) à présence minimale, depuis l'objet individuel (102, 402) jusqu'à un dispositif mesureur (170, 470) affecté à la mesure d'au moins une grandeur physique desdites particules de crasse (178, 478) éliminées dudit objet individuel (102, 402) par rinçage.

2. Appareil selon la revendication 1, **caractérisé par le fait que** le dispositif mesureur renferme un dispositif d'analyse (174, 474) dans lequel, sur la base de l'information de mesure relative aux particules de crasse (178, 478) éliminées de l'objet individuel (102, 402) par rinçage, le degré d'encrassement de cet objet (102, 402) est déterminé.

3. Appareil selon la revendication 1 ou 2, **caractérisé par le fait que** le dispositif de transport (152, 652) imprime des mouvements au moyen de retenue (168, 604) à présence minimale, à partir du dispositif collecteur (142, 442), jusqu'au dispositif mesureur (170, 470).

4. Appareil selon l'une des revendications 1 à 3, **caractérisé par le fait que** le moyen de retenue, à présence minimale, inclut une membrane de filtration (604) placée dans un porte-membrane (606).

5. Appareil selon la revendication 4, **caractérisé par le fait que** le dispositif de transport est un manipulateur à commande automatique, en particulier un robot (652) servant à imprimer des mouvements au porte-membrane (606) jusque dans le dispositif collecteur (442), à partir d'un magasin (608), et/ou jusque dans le dispositif mesureur (470) à partir dudit dispositif collecteur (442).

6. Appareil selon l'une des revendications 1 à 3, **caractérisé par le fait que** le moyen de retenue, à présence minimale, inclut un segment (168) d'un ruban de filtration (146).

7. Appareil selon la revendication 6, **caractérisé par le fait que** le ruban de filtration (146) peut être mis en mouvement depuis un poste de dévidage (150) jusqu'à un poste d'enroulement (151), et sert de dispositif de transport (152) dédié au segment (168) dans ledit ruban de filtration (146).

8. Appareil selon l'une des revendications 1 à 7, **caractérisé par le fait qu'**un système de canalisation (136, 436) est prévu pour la mise en circulation de fluide (162, 462) destiné à l'élimination de particules de crasse (178, 478) par rinçage, dans la zone de rinçage (120, 420), au moins une buse (114, 414) étant disposée dans ladite zone de rinçage (120, 420), en vue du rinçage par fluide (162, 462).

9. Appareil selon la revendication 8, **caractérisé par le fait qu'**un dispositif d'aspiration (160, 460) est implanté dans le système de canalisation (136, 436) en vue d'aspirer, à travers le moyen de retenue (168, 604) à présence minimale, du fluide (162, 462) chargé de particules de crasse.

10. Appareil selon l'une des revendications 1 à 9, **caractérisé par** une chambre (104, 404) entourant la zone de rinçage (120, 420), et par un dispositif conçu pour régler une surpression régnant dans ladite zone de rinçage (120, 420) et/ou pour asperger ladite zone de rinçage (120, 420) par admission, dans ladite chambre (104, 404), d'un fluide gazeux (301) débarrassé de particules de crasse (178, 478).

11. Appareil selon la revendication 9, **caractérisé par le fait que** le fluide gazeux, pouvant être admis dans la chambre (104, 404), est guidé à travers un filtre (122, 422) afin de le débarrasser de particules de crasse.

12. Appareil selon la revendication 11, **caractérisé par le fait que** le filtre (122, 422) contient des mats de fibres de verre à agencement ondulé ou en zigzag.

13. Appareil selon l'une des revendications 1 à 12, **caractérisé par le fait qu'**un dispositif (115, 415) est logé dans la chambre (104, 404), en vue du rinçage d'une paroi (117, 417) de ladite chambre (104, 404) par du fluide (162, 462).

14. Appareil selon l'une des revendications 1 à 13, **caractérisé par le fait que** le dispositif mesureur (170) présente un microscope (171, 471) associé à une caméra numérique (172) et à un ordinateur d'évaluation (174).

15. Appareil selon l'une des revendications 1 à 14, **caractérisé par le fait que** la zone de rinçage (120, 420) est intégrée dans un caisson de transport (101, 401) avec le dispositif collecteur (142, 442) et le dispositif mesureur (170, 470).

16. Procédé conçu pour déterminer un degré d'encrassement d'objets et notamment de pièces usinées, à l'aide d'un appareil conforme à l'une des revendications 1 à 15,
dans lequel des particules de crasse (178, 478) sont éliminées d'un objet (102, 402) par rinçage au moyen d'un fluide (162, 462), dans une atmosphère de salle blanche,
dans lequel il s'opère une collecte desdites particules de crasse (178, 478) éliminées d'un objet (102, 402) par rinçage,
dans lequel une étendue spatiale et/ou un nombre des particules de crasse (178, 478), collectées à partir de l'objet (102, 402), est (sont) comparé(e)s à une valeur de référence, et
dans lequel le degré d'encrassement de l'objet (102, 402) est déduit sur la base de l'écart affectant l'étendue spatiale et/ou le nombre desdites particules de crasse (178, 478) collectées à partir dudit objet (102, 402).
